# EUROPEAN PATENT APPLICATION

(11) **EP 4 443 342 A1**
(43) Date of publication of application: **09.10.2024**
(21) Application number: 21967306.8
(22) Date of filing: 06.12.2021
(51) Int. Cl.: G06N 10/00, B82Y 10/00

(54) **DEVICE AND METHOD**

(71) Applicant: LG Electronics Inc., Yeongdeungpo-gu Seoul 07336 (KR)
(72) Inventor: CHA, Hyukgeun, Seoul 06772 (KR); KIM, Dongho, Seoul 06772 (KR); CHOI, Seungjong, Seoul 06772 (KR); KYE, Jeongil, Seoul 06772 (KR); CHOI, Yunjun, Seoul 06772 (KR)
(74) Representative: Vossius & Partner Patentanwälte Rechtsanwälte mbB
(86) International application number: PCT/KR2021/018357
(87) International publication number: WO 2023/106433

(57) **Abstract**

A device comprises: a classical computing device; a quantum computing device; a memory for storing one or more programs; and a processor communicating with the memory to execute the one or more programs and control the classical computing device and the quantum computing device. The processor may: obtain the boundary condition and respective initial values of a plurality of points of a geometric structure with respect to an object, by means of the classical computing device; obtain solutions to respective multi-physics problems of the plurality of points on the basis of the obtained boundary condition and respective initial values of the plurality of points, by means of the quantum computing device; and map the obtained solutions to the multi-physics problems to the respective plurality of points by means of the classical computing device.

## Description

### [Technical Field]

Embodiments relate to a device and method that can quickly and efficiently solve problems that cannot be solved by classical computing.

### [Background Art]

In advanced industries such as the electronics industry, aviation industry, and automobile industry, a lot of time and money have been spent to create test products for research and development, and simulations were conducted using classical computing devices for this research and development.

Simulation of electronics, aviation, and automobiles requires solving multiphysics problems.

Conventional multiphysics problems using classical computing were divided into a finite number of grids, a solution in each grid was obtained through numerical analysis, and a finite element method was used to solve portions between the grids using an approximation method. However, the greater the number of grids, the higher the accuracy, but the amount of calculation increases in proportion to the number, so it takes a lot of time, or in the case of certain multiphysics problems, calculation using classical computing is impossible.

Therefore, there is an urgent need for a method to quickly and efficiently solve multiphysics problems.

### [Invention]

### [Technical Problem]

An object of embodiments is to solve the above-described problems and other problems.

Another object of the embodiments is to provide a device and method that can quickly and efficiently solve multiphysics problems.

Another object of the embodiments is to provide a device and method that can save time and cost.

Another object of the embodiments is to provide a device and method that can obtain accurate results.

The technical problems of the embodiments are not limited to those described in this item and include those that can be understood through the description of the invention.

### [Technical Solution]

In order to achieve the above and other objects, according to an aspect of embodiments, a device may comprise a classical computing device, a quantum computing device, a memory configured to store at least one program, and a processor configured to communicate with the memory to execute the at least one program and control the classical computing device and the quantum computing device. The processor may obtain an initial value and boundary condition of each of a plurality of points of a geometric structure for an object, by the classical computing device, obtain a solution to a multiphysics problem of each of the plurality of points based on the obtained initial value and boundary condition of each of the plurality of points, by the quantum computing device, and map the obtained solution to the multiphysics problem to each of the plurality of points, by the classical computing device.

The processor may classify the multiphysics problem into at least one problem related to classical computing and at least one problem related to quantum computing, by the classical computing device.

The processor may obtain a solution to the at least one problem related to classical computing based on the obtained initial value and boundary condition of each of the plurality of points, by the classical computing device and obtain a solution to the at least one problem related to quantum computing based on the obtained initial value and boundary condition of each of the plurality of points, by the quantum computing device.

The processor may match the solution to each of the at least one problem related to classical computing and the solution to each of the at least one problem related to quantum computing to obtain the solution to the multiphysics problem, by the classical computing device.

The processor may map input data to each of the plurality of points of the geometric structure, by the classical computing device and obtain the initial value and boundary condition of each of the plurality of points based on the mapped input data, by the classical computing device.

The processor may visualize the geometric structure based on the solution to the multiphysics problem mapped to each of the plurality of points, by the classical computing device.

The processor may store the visualized geometric structure in the memory as an image, by the classical computing device.

The processor may obtain at least one important point based on a result mapped to each of the plurality of points, by the classical computing device, assign at least one additional point around each of the obtained at least one important point, by the classical computing device, obtain the solution to the multiphysics problem of the assigned at least one additional point, by the quantum computing device, and map the obtained solution to the multiphysics problem to each of the at least one additional point, by the classical computing device.

The solution to the multiphysics problem may be obtained using a differential equation.

According to another aspect of embodiments, a method may comprise obtaining an initial value and boundary condition of each of a plurality of points of a geometric structure for an object, by a classical computing device, obtaining a solution to a multiphysics problem of each of the plurality of points based on the obtained initial value and boundary condition of each of the plurality of points, by a quantum computing device and mapping the obtained solution to the multiphysics problem to each of the plurality of points, by the classical computing device.

The method may comprise classifying the multiphysics problem into at least one problem related to classical computing and at least one problem related to quantum computing, by the classical computing device.

The method may comprise obtaining a solution to the at least one problem related to classical computing based on the obtained initial value and boundary condition of each of the plurality of points, by the classical computing device and obtaining a solution to the at least one problem related to quantum computing based on the obtained initial value and boundary condition of each of the plurality of points, by the quantum computing device.

The method may comprise matching the solution to each of the at least one problem related to classical computing and the solution to each of the at least one problem related to quantum computing to obtain the solution to the multiphysics problem, by the classical computing device.

The method may comprise obtaining at least one important point based on a result mapped to each of the plurality of points, by the classical computing device, assigning at least one additional point around each of the obtained at least one important point, by the classical computing device, obtaining the solution to the multiphysics problem of the assigned at least one additional point, by the quantum computing device, and mapping the obtained solution to the multiphysics problem to each of the at least one additional point, by the classical computing device.

### [Effect of the Invention]

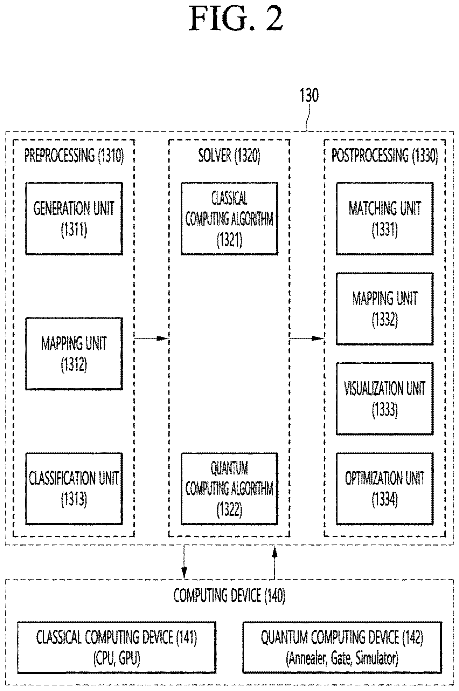

According to embodiments, as shown in FIGS. 2, 3 and 5, in obtaining a solution to a multiphysics problem, in the case that there is a problem that cannot be obtained by the classical computing device 141, the problem is obtained by the quantum computing device 142, thereby preventing the problem from being not solved by the classical computing device 141 or preventing a lot of time from being consumed. That is, the multiphysics problem is classified into a problem related to classical computing and a problem related to quantum computing, the solution to the problem related to classical computing are obtained using the classical computing algorithm 1321, and the solution to the problem related to quantum computing is obtained using the quantum computing algorithm 1322, and the solution to the multiphysics problem is obtained by matching the solution to the problem related to classical computing with the solution to the problem related to quantum computing, enabling quick and efficient computing and dramatically reducing time and cost.

According to embodiments, user convenience can be improved by visualizing the geometric structure based on the solution to the multiphysics problem obtained for each of a plurality of points and providing the visualized result to the user, and accurate results can be obtained and reliability of the device 100 can be improved by obtaining the solution to the multiphysics problem for more detailed point through the optimization process.

Additional scope of applicability of the embodiments will become apparent from the detailed description that follows. However, since various changes and modifications within the spirit and scope of the embodiments may be clearly understood by those skilled in the art, the detailed description and specific embodiments, such as preferred embodiments, should be understood as being given by way of example only.

### [Description of Drawings]

FIG. 1 is a block diagram showing a device according to an embodiment.
FIG. 2 is a block diagram showing a memory and a computing device.
FIG. 3 is a flowchart explaining a method according to an embodiment.
FIG. 4 is a flowchart explaining step S220 of FIG. 3 in detail.
FIG. 5 is a flowchart explaining step S230 of FIG. 3 in detail.
FIG. 6 is a flowchart explaining step S240 of FIG. 3 in detail.
FIG. 7 is a flowchart explaining the method after step S240 of FIG. 3.
FIG. 8 shows a hierarchical structure of a device according to an embodiment.
FIG. 9 shows analysis of the movement of a micro light-emitting diode (LED) in a micro LED transfer process using a device according to an embodiment.
FIG. 10 shows an object for analyzing the movement of a micro LED in a micro LED transfer process.
FIG. 11 shows a geometric structure and plurality of points.
FIG. 12 shows a visualized image of a geometric structure as a result of analysis of the movement of a micro LED during a micro LED transfer process in area A of FIG. 11 .
FIG. 13 shows an example of a multiphysics problem.

The size, shape, and dimensions of components shown in the drawings may differ from actual ones. In addition, although the same components are shown in different sizes, shapes, and numbers between the drawings, this is only an example in the drawings, and the same components are shown in the same sizes, shapes, and numbers across the drawings.

### [Best Mode]

Hereinafter, embodiments disclosed in the present specification will be described in detail with reference to the attached drawings. However, identical or similar components will be assigned the same reference numerals regardless of reference numerals, and description thereof will not be repeated. The suffixes 'module' and 'unit' for components used in the following description are given or used interchangeably in consideration of ease of writing the specification, and do not have distinct meanings or roles in themselves. In addition, the attached drawings are intended to facilitate easy understanding of the embodiments disclosed in this specification, and the technical ideas disclosed in this specification are not limited by the attached drawings.

Embodiments may be applied to technical fields capable of solving multiphysics problems. For example, embodiments may be applied to fluid dynamics simulation, distribution of various forces, movement of particles, optimal design of mechanisms, etc. in advanced industries such as the electronics industry, aviation industry, automobile industry, etc.

Hereinafter, a device and method according to an embodiment will be described.

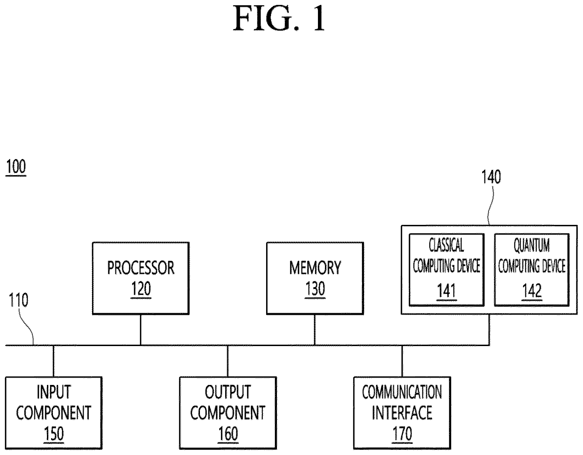

FIG. 1 is a block diagram showing a device according to an embodiment.

Referring to FIG. 1, the device 100 according to the embodiment includes a bus 110, a processor 120, a memory 130, a computing device 140, an input component 150, an output component 160, and a communication interface 170.

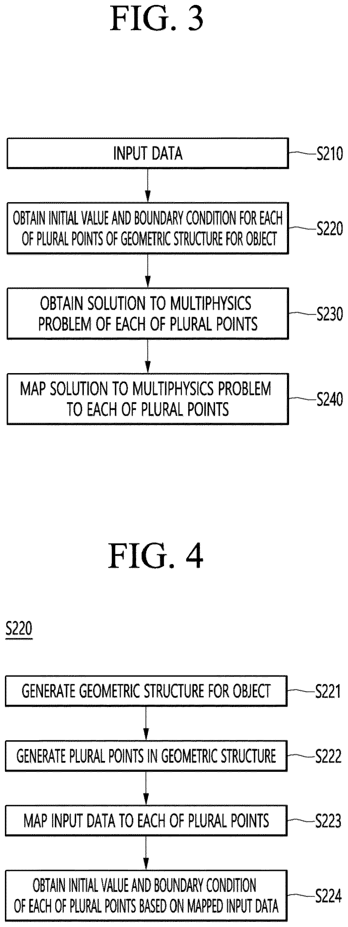

The device 100 may include more components, different components, and differently arranged components than those shown in FIG. 3. The device 100 may be called an apparatus, system, server, block, etc.

The bus 110 may include components that enable wired and/or wireless communication between the components of the device 100.

The processor 120 may include a central processing unit, a graphics processing unit, a microprocessor, a controller, a microcontroller, a digital signal processor, a field programmable gate array, an application-specific integrated circuit, and/or other types of processing components. The processor 120 may be implemented as hardware, firmware, or a combination of hardware and software. The processor 120 may include one or more processors that may be programmed to perform functions.

The memory 130 may include random access memory, read only memory, and/or other types of memory (e.g., flash memory, magnetic memory, and/or optical memory).

The input component 150 allows the device 100 to receive input, such as user input and/or sensed input. For example, the input component 150 may include a touchscreen, a keyboard, keypad, a mouse, a button, a microphone, a switch, a sensor, a global positioning system component, an accelerometer, a gyroscope, and/or an actuator.

The output component 160 allows the device 100 to provide output, such as a display, a speaker, and/or one or more light emitting diodes.

The communication interface 170 allows the device 100 to communicate with other devices through a wired connection and/or a wireless connection. For example, the communication interface 170 may include a receiver, a transmitter, a transceiver, a modem, a network interface card, and/or an antenna.

The device 100 may perform one or more processes described herein. For example, a non-transitory computer-readable medium (e.g., memory 130) may store a set of instructions for execution by the processor 120 (e.g., one or more instructions, code, software code and /or program code). The processor 120 may execute a set of instructions to perform one or more processes described in the embodiment. For example, execution of the set of instructions by the processor 120 may cause the processor 120 and/or the device 100 to perform one or more processes described in the embodiment. For example, hardware circuitry may be used instead of or in combination with instructions for performing one or more processes described in the embodiment. Accordingly, the implementation described herein is not limited to any particular combination of hardware circuitry and software.

Meanwhile, the computing device 140 may include a classical computing device 141 and a quantum computing device 142.

The classical computing device 141 may be a hardware device capable of physically computational processing, such as a central processing unit or a graphics processing unit. For example, the classical computing device 141 may use the classical computing algorithm 1321 to perform computational processing according to preset instructions or at least one program or to obtain a solution to a multiphysics problem.

The quantum computing device 142 may be a hardware device capable of quantum computational processing, such as an annealer, a gate, or a simulator. In other words, the quantum computing device 142 refers to a device that performs computing based on quantum mechanical principles such as superposition and entanglement. The quantum computing device 142 may solve specific problems much faster than classical computing device 141. The specific problems may include, for example, prime factorization, quantum chemistry, quantum communication, quantum security, optimization, differential equations, linear mathematics, etc. Moreover, the quantum computing device 142 may potentially solve problems that cannot be solved by the classical computing device 141.

Unlike typical classical computing, which requires data encoded as binary numbers, each of which is always in one of two defined states (0 or 1), quantum computing may use quantum bits (or qubits) that may be in a superposition of states. The qubit may be a two-state (or two-level) quantum mechanical system, such as the spin of an electron or the polarization state of a photon. For example, a spin up state may represent "1" while a spin down state may represent "0". Spin that are neither up nor down may indicate a superposition state. Therefore, a small number of qubits may hold a relatively large amount of information. For example, 100 particles may represent a maximum of 2¹⁰⁰ superposition states. The quantum computing device 142 may operate on qubits using ultrafast laser pulses or other similar techniques. Since this quantum computing device 142 is widely known, detailed description thereof is omitted.

For example, the quantum computing device 142 may obtain a solution to a multiphysics problem according to preset instructions or at least one program using a quantum computing algorithm.

The preset instructions or at least one program may be stored in the memory 130. Classical computing algorithms or quantum computing algorithms may be stored in the memory 130.

As will be described later, in an embodiment, the solution to at least one physical problem of the multiphysics problems may be obtained by the classical computing device 141, and the solution to the remaining physical problems may be obtained by the quantum computing device 142.

FIG. 2 is a block diagram showing a memory and a computing device.

As shown in FIG. 2, the memory 130 may include at least one program.

For example, the memory 130 may include a preprocessing program 1310, a solver program 1320, and a postprocessing program 1330.

The preprocessing program 1310, the solver program 1320, and the postprocessing program 1330 may be loaded from the memory 130 under the control of the processor 120 and then executed, respectively. The preprocessing program 1310, the solver program 1320, and the postprocessing program 1330 may be executed in this order, or the preprocessing program 1310, the solver program 1320, and the postprocessing program 1330 may be executed simultaneously.

For example, the preprocessing program 1310 and the postprocessing program 1330 may be executed in the classical computing device 141. For example, the classical computing algorithm 1321 of the solver program 1320 may be executed on the classical computing device 141.

For example, the quantum computing algorithm 1322 of the solver program 1320 may be executed on the quantum computing device 142.

The preprocessing program 1310 may execute a preparation process for execution of the solver program 1320. The preprocessing program 1310 may include a generation unit 1311, a mapping unit 1312, and a classification unit 1313.

The generation unit 1311 may generate a geometric structure of an object based on user input data, such as various parameters or process variables and/or boundary condition expressions. The process variables may include magnet shape, movement speed, electrode structure, voltage, frequency, etc. during the transfer process of micro LED assembled by self-assembly method.

The generation unit 1311 may generate (or assign) a plurality of points to the geometric structure based on preset point information. Preset points may be set to have a certain distance between them, but are not limited thereto.

The mapping unit 1312 may map input data to each of a plurality of points of the geometric structure based on user input data, for example, various parameters or process variables, and boundary condition expressions. For example, the parameter or process variable may be assigned to each of the plurality of points of the geometric structure as input data by considering the shape, size, location, material properties, electrical/optical characteristics, etc.

The mapping unit 1312 may obtain an initial value and/or boundary condition of each of the plurality of points of the geometric structure based on the parameters or process variables and boundary condition expressions of each of the plurality of points of the geometric structure. The mapping unit 1312 may map the initial value and/or boundary condition to each of the plurality of points of the geometric structure. The initial value may be a coordinate position or starting position of each of the plurality of points, and the boundary condition may be a process variable of each of the plurality of points, but is not limited thereto.

For example, each of the plurality of points may be assigned an identification number. In this case, the obtained initial value and/or boundary condition may be stored to correspond to each identification number of each of the plurality of points.

The classification unit 1313 may classify the multiphysics problem into at least one problem related to classical computing and at least one problem related to quantum computing.

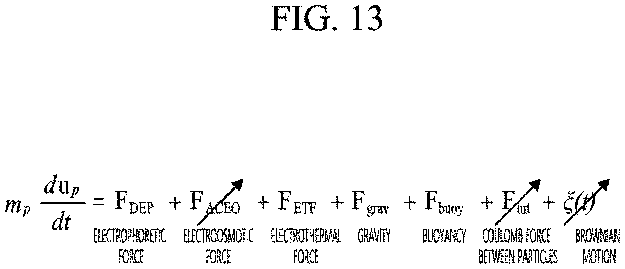

For example, as shown in FIG. 13, a force formed on the object during the micro LED transfer process may be obtained using a differential equation. In this case, the force may be a sum of multiple forces, such as electrophoretic force, electroosmotic force, electrothermal force, gravity, buoyancy, Coulomb force between particles, force due to Brownian motion, etc. Among these multiple forces, some forces may not be obtained using differential equations by the classical computing device 141. In this case, some forces may be obtained quickly and efficiently using differential equations by the quantum computing device 142. Therefore, before obtaining the solution to the multiphysics problem, that is, the sum of the plurality of forces, the classification unit 1313 may determine whether each multiphysics problem is a problem related to classical computing or a problem related to quantum computing, and classify each multiphysics problem according to the determined result.

The solution to the problem related to classical computing may be obtained by the classical computing device 141, and the solution to the problem related to quantum computing may be obtained by the quantum computing device 142.

The solver program 1320 may obtain a solution to a multiphysics problem using a classical computing algorithm 1321 and/or a quantum computing algorithm 1322. The classical computing algorithm 1321 may not only be used to obtain a solution to a multiphysics problem, but may also be used to perform general operation or control of the device 100 of the embodiment.

The solver program 1320 may include a classical computing algorithm 1321 and a quantum computing algorithm 1322.

The classical computing algorithm 1321 may be loaded from the memory 130 under the control of the processor 120 and executed by the classical computing device 141. For example, the generation unit 1311 may be operated by the classical computing algorithm 1321 to generate a geometric structure for an object and generate a plurality of points of the generated geometric structure. For example, the mapping unit 1312 may be operated by the classical computing algorithm 1321 to obtain the initial value and/or boundary condition for each of the plurality of points of the geometric structure.

For example, a solution to a problem related to classical computing among multiphysics problems may be obtained by the classical computing algorithm 1321. The classical computing algorithm 1321 may be constructed based on a finite element method in which the solution to each of a finite number of grids is obtained through numerical analysis and the portions between the grids are solved using an approximation method, but are not limited thereto.

For example, a matching unit 1331, a mapping unit 1332, a visualization unit 1333, and an optimization unit 1334 of the postprocessing program 1330 may be operated by the classical computing algorithm 1321. The operations of each of the matching unit 1331, the mapping unit 1332, the visualization unit 1333, and the optimization unit 1334 will be described later.

The quantum computing algorithm 1322 may be loaded from memory 130 under the control of the processor 120 and executed by the quantum computing device 142. For example, a solution to a problem related to quantum computing among multiphysics problems may be obtained by the quantum computing algorithm 1322.

The quantum computing algorithm 1322 is a differential equation algorithm and may be configured to perform a series of procedures, but is not limited thereto. In other words, a feature map may convert a differential equation solution function (y(x)) into a quantum state using a basis function. A variational quantum circuit may calculate 2ⁿ weighted sums for n qubits. Accordingly, the expected value of the quantum state output from the variational quantum circuit may be measured, and the differential equation solution function value may be obtained. In addition, the differential value (dy/dx) of the solution function may be obtained using a quantum differentiation circuit. Then, a loss function is calculated using the solution to the differential equation and the boundary condition (y(0)-c), and a parameter vector (θ) to optimize the loss function (L(dy/dx,y,x)) may be updated. Through this series of processes, the optimal solution to the differential equation may be obtained.

The postprocessing program 1330 may perform postprocessing using the obtained solution to the multiphysics problem. For example, the postprocessing program 1330 may obtain a desired result based on the obtained solution to the multiphysics problem. The desired result may include a visualization result, an optimization result, etc. The visualization result may be a result processed to be visually displayed to the user based on the solution to the multiphysics problem. The optimization result is to obtain the solution to the multiphysics problem for more detailed points in order to obtain more accurate results. To this end, the preprocessing program 1310 and the solver program 1320 may be executed together.

The postprocessing program 1330 may include a matching unit 1331, a mapping unit 1332, a visualization unit 1333, and an optimization unit 1334.

The matching unit 1331 may match the solution to the problem related to classical computing obtained using the classical computing algorithm 1321 and the solution to the problem related to quantum computing obtained using the quantum computing algorithm 1322 to obtain the solution to the multiphysics problem. For example, matching may mean summing or integration, but is not limited thereto. The solution to the multiphysics problem for each of a plurality of points of the geometric structure may be obtained by the matching unit 1331.

The mapping unit 1332 may map the solution to the multiphysics problem to each of the plurality of points of the geometric structure. As described above, the solution to the multiphysics problem may be stored to correspond to each identification number of each of the plurality of points. For example, the solution to the multiphysics problem is a solution to a differential equation, which may be force, temperature, speed, or height, but is not limited thereto.

The visualization unit 1333 may visualize the geometric structure based on the solution to the multiphysics problem mapped to each of the plurality of points. Visualization refers to displaying intensity, direction, movement, etc. using different colors, arrows of different thickness or length, and/or length or animation.

The optimization unit 1334 may assign additional points around an important point based on the solution to the multiphysics problem for each of the plurality of points of the geometric structure, and obtain the solution to the multiphysics problem for each of the assigned additional points, thereby obtaining the most accurate analysis or interpretation results. For example, in the case that the solution to the multiphysics problem for each of a plurality of points changes rapidly at a specific point among the plurality of points, the specific point may be selected as an important point. Additional points may be assigned a set number and location around the important point. For example, additional points may be assigned spaced apart from the important point along the 3 o'clock, 6 o'clock, 9 o'clock, and 12 o'clock directions based on the important point. For example, additional points may be assigned to intermediate positions between adjacent points, but are not limited thereto.

The optimization process may be continuously performed until the optimization conditions are satisfied. The optimization conditions may be preset or tracked using artificial intelligence (Al).

According to embodiments, in obtaining a solution to a multiphysics problem, in the case that there is a problem that cannot be obtained by the classical computing device 141, the problem is obtained by the quantum computing device 142, thereby preventing the problem from being not solved by the classical computing device 141 or preventing a lot of time from being consumed. That is, the multiphysics problem is classified into a problem related to classical computing and a problem related to quantum computing, the solution to the problem related to classical computing are obtained using the classical computing algorithm 1321, and the solution to the problem related to quantum computing is obtained using the quantum computing algorithm 1322, and the solution to the multiphysics problem is obtained by matching the solution to the problem related to classical computing with the solution to the problem related to quantum computing, enabling quick and efficient computing and dramatically reducing time and cost.

According to embodiments, user convenience can be improved by visualizing the geometric structure based on the solution to the multiphysics problem obtained for each of a plurality of points and providing the visualized result to the user, and accurate results can be obtained and reliability of the device 100 can be improved by obtaining the solution to the multiphysics problem for more detailed point through the optimization process.

FIG. 3 is a flowchart explaining a method according to an embodiment.

Referring to FIGS. 1 to 3, the method according to the embodiment may be executed by the preprocessing program 1310, the solver program 1320, and the postprocessing program 1330 stored in the memory 130. That is, the processor 120 may load each of the preprocessing program 1310, the solver program 1320, and the postprocessing program 1330 stored in the memory 130 and execute the method according to the embodiment.

First, user input data may be input through the input component 150 (S210). The user input data includes process variables or parameters, boundary condition expressions, and differential equations for obtaining the solution to multiphysics problems. The boundary condition expressions or differential equations may be obtained through modeling. The solution to the multiphysics problem may be obtained using differential equations by the classical computing device 141 or the quantum computing device 142.

The processor 120 may obtain the initial value and boundary condition for each of a plurality of points of the geometric structure for the object (S220). The initial value and boundary condition may be obtained based on process variables or parameters and boundary condition expressions.

FIG. 4 is a flowchart explaining step S220 of FIG. 3 in detail.

As shown in FIG. 4, the processor 120 may generate the geometric structure for the object (S221).

The processor 120 may generate the geometric structure of the object based on user input data, such as various parameters or process variables and/or boundary condition expressions. The process variables may include magnet shape, movement speed, electrode structure, voltage, frequency, etc. during the transfer process of micro LED assembled by self-assembly method.

The processor 120 may generate a plurality of points in the geometric structure (S222).

The processor 120 may generate (or assign) a plurality of points in the geometric structure based on preset point information. The preset points may be set to have a certain distance between them, but is not limited thereto.

The processor 120 may map input data to each of a plurality of points (S223).

The processor 120 may map input data to each of the plurality of points of the geometric structure based on user input data, such as various parameters or process variables and boundary condition expressions. The input data may be parameters or process variables subdivided for each of the plurality of points of the geometric structure based on the parameters or process variables input as user input data. These subdivided parameters or process variables may be mapped to each of the plurality of points of the geometric structure.

The processor 120 may obtain the initial value and/or boundary condition of each of the plurality of points of the geometric structure based on the parameters or process variables and boundary condition expressions of each of the plurality of points of the geometric structure (S224). The initial value and/or boundary condition obtained in this way may be mapped to each of the plurality of points of the geometric structure.

Therefore, as a preprocessing process, a preparation process for obtaining a solution to the multiphysics problem for each of the plurality of points of the geometric structure may be completed.

The processor 120 may obtain a solution to the multiphysics problem for each of the plurality of points based on the obtained initial value and boundary condition of each of the plurality of points by the quantum computing device 142 (S230).

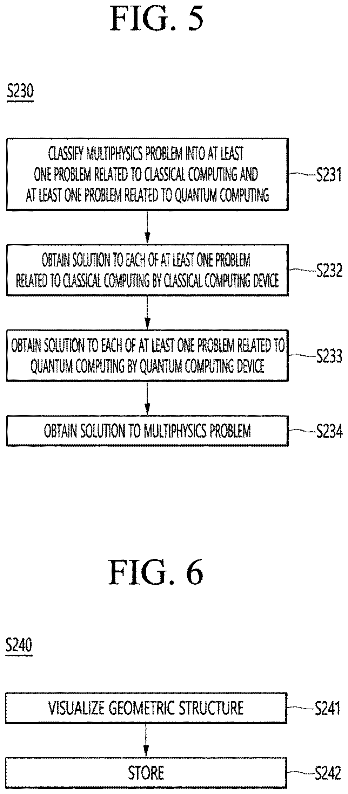

FIG. 5 is a flowchart explaining step S230 of FIG. 3 in detail.

As shown in FIG. 5, the processor 120 may classify the multiphysics problem into at least one problem related to classical computing and at least one problem related to quantum computing by the classical computing device 141 (S231).

The multiphysics problem may be a combination of at least one physical problem. For example, as shown in FIG. 13, the force formed on the object during the micro LED transfer process includes a sum of multiple forces such as electrophoresis force, electroosmotic pressure force, force due to electric heat, gravity, buoyancy force, Coulomb force between particles, force due to Brownian motion, etc. Among these multiple forces, the solution to some forces may be obtained quickly by the classical computing device 141, and the solution to other forces may be obtained more quickly by the quantum computing device 142 than by the classical computing device 141.

Accordingly, the multiphysics problem may be classified into the problem related to classical computing and the problem related to quantum computing for input to a more suitable computing device 140 so that solutions may be obtained more quickly. For the problem related to classical computing, the solution to the corresponding physical problem may be easily obtained by the classical computing device 141, and for the problem related to quantum computing, the solution to the corresponding physical problem may be easily obtained by the quantum computing device 142. Classification criteria may be set in advance.

Accordingly, the processor 120 may determine whether each of the plurality of problems included in the multiphysics problem is a problem related to classical computing or a problem related to quantum computing, with reference to the preset classification criteria, and classify each multiphysics problem into the problem related to classical computing and the problem related to quantum computing according to the determined result.

The processor 120 may obtain a solution to each of at least one problem related to classical computing based on the initial value and boundary condition of each of the plurality of points by the classical computing device 141 (S232).

The processor 120 may load the classical computing algorithm 1321 from the memory 130, execute the loaded classical computing algorithm 1321 on the classical computing device 141, and obtain at least one solution to each problem related to classical computing based on the initial value and boundary condition of each of the plurality of points.

The processor 120 may obtain a solution to each of at least one problem related to quantum computing based on the initial value and boundary condition of each of the plurality of points, by the quantum computing device 142 (S233).

The processor 120 may load the quantum computing algorithm 1322 from the memory 130, execute the loaded quantum computing algorithm 1322 on the quantum computing device 142, and obtain at least one solution to each problem related to quantum computing based on the initial value and boundary condition of each of the plurality of points.

The processor 120 may obtain a solution to a multiphysics problem by matching the solution to each of at least one problem related to classical computing and the solution to each of at least one problem related to quantum computing, by the classical computing device 141 (S234).

For example, the processor 120 may sum up the solution to each of at least one problem related to classical computing and the solution to each of at least one problem related to quantum computing, and obtain the summed value as the solution to the multiphysics problem.

In this way, a solution to a specific problem that cannot be solved by the classical computing device 141 is obtained by the quantum computing device 142, and the solution to the multiphysics problem of each of the plurality of points in the visualization structure for a specific object may be obtained by matching the obtained solution to the specific problem and the solution to the problem obtained by the classical computing device 141, thereby enabling quick and efficient computing and reducing time and cost.

The processor 120 may map the solution to the multiphysics problem to each of the plurality of points (S240).

FIG. 6 is a flowchart explaining step S240 of FIG. 3 in detail.

As shown in FIG. 6, the geometric structure may be visualized based on the solution to the multiphysics problem mapped to each of the plurality of points of the geometric structure, by the classical computing device 141 (S241). Visualization refers to displaying intensity, direction, movement, etc. using different colors, arrows of different thickness or length, and/or length or animation.

The processor 120 may store the visualized geometric structure as an image in the memory 130, by the classical computing device 141 (S242).

For example, when a display request is received through the input component 150, the processor 120 may load the visualized structure image from the memory 130 and output it through the output component (160 in FIG. 1). For example, a visualized structure image may be displayed on a display unit. Alternatively, the visualized structure may be output as audio.

In this way, by providing the visualized structural image to the user, the user may take follow-up actions based on the analysis results.

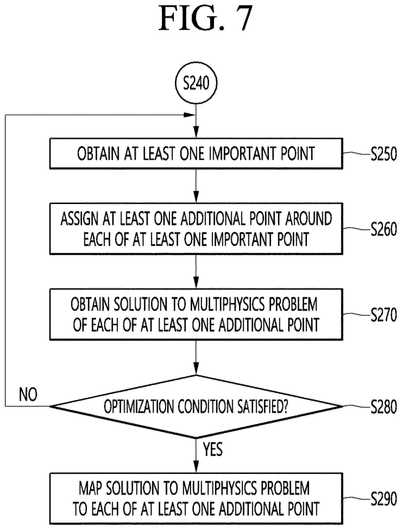

FIG. 7 is a flowchart explaining the method after step S240 of FIG. 3.

As shown in FIG. 7, the processor 120 may obtain at least one important point based on the results of being mapped to each of the plurality of points, by the classical computing device 141 (S250).

For example, in the case that the solution to the multiphysics problem of each of the plurality of points changes rapidly at a specific point among the plurality of points, the specific point may be selected as an important point.

The processor 120 may assign at least one additional point around each of at least one important point, by the classical computing device 141 (S260).

The additional points may be assigned a set number and location around the important point.

The processor 120 may obtain a solution to the multiphysics problem of each of the assigned at least one additional point, by the quantum computing device 142 (S270).

The processor 120 may perform steps S231 to S234 shown in FIG. 5 for each additional point to obtain a solution to the multiphysics problem of each additional point.

The processor 120 may map the obtained solution to the multiphysics problem to each of at least one additional point, by the classical computing device 141 (S290).

Meanwhile, S250 to S280 may be repeatedly performed until the optimization conditions are satisfied through the optimization process (S280). The optimization conditions may be preset or tracked using artificial intelligence (Al).

When the optimization condition is satisfied, the process moves to S290, where the solution to the multiphysics problem of each of the at least one additional point is obtained, so that the obtained solution to the multiphysics problem may be mapped to each of the at least one additional point.

In this way, S241 and S242 shown in FIG. 6 are performed based on the solution to the multiphysics problem mapped to each of the plurality of points already set as well as the solution to the multiphysics problem mapped to each of at least one additional point, thereby visualizing and storing the geometric structure. Therefore, the results for multiple points and at least one additional point, i.e. the solution to the multiphysics problem, are reflected in the visualized image of the geometric structure, allowing the user to perform a more detailed analysis focusing on the important point to more accurately and clearly obtain what to be identified about the object.

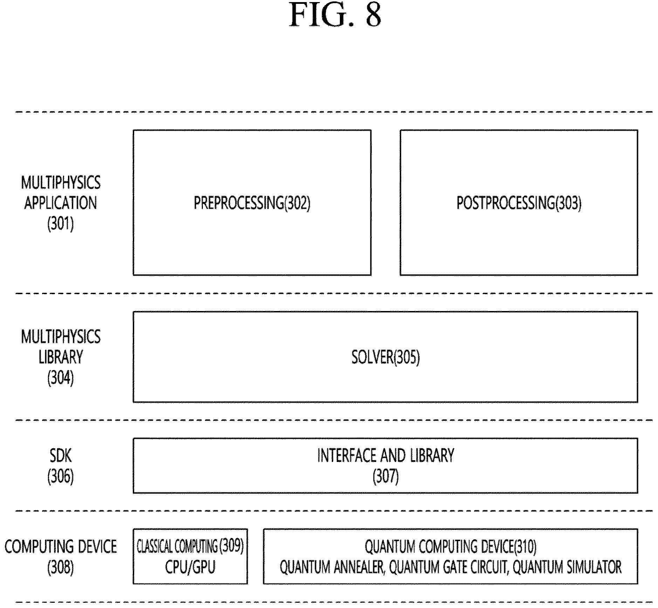

FIG. 8 shows a hierarchical structure of a device according to an embodiment.

Referring to FIG. 8, the hierarchical structure of the device 100 according to the embodiment may include a computing device 308, a software development kit (SDK) 306, a multiphysics library 304, and a multiphysics application 301. The computing device 308 and the software development kit 306 may be hardware or devices thereof, and the multiphysics application 301 may be software or a device thereof.

The computing device 308 may include a classical computing device 309 and a quantum computing device 310. The classical computing device 309 may be the classical computing device 141 shown in FIGS. 1 and 2, and the quantum computing device 310 may be the quantum computing device 142 shown in FIGS. 1 and 2.

Typically, the software development kit is a set of development tools that are used by software engineers to create application programs for specific software packages, software frameworks, hardware platforms, computer systems, game consoles, operating systems, etc.

In an embodiment, the software development kit 306 allows the solver program 305 of the multiphysics library 304 or the preprocessing program 302 and postprocessing program 303 of the multiphysics application 301, as application programs, to be created or installed. To this end, the software development kit 306 may include, but is not limited to, an interface and a library 307. Therefore, using the software development kit 306, the solver program 305 of the multiphysics library 304 or the preprocessing program 302 and postprocessing program 303 of the multiphysics application 301 are created or the already created solver program 305 of the multiphysics library 304 or the preprocessing program 302 and postprocessing program 303 of the multiphysics application 301 are set to be compatible with the computing device 308, so that the device 100 according to the embodiment may be configured.

The preprocessing program 302, the postprocessing program 303, and the solver program 305 may be the preprocessing program 1310, the postprocessing program 1330, and the solver program 1320 shown in FIG. 2, respectively.

Hereinafter, as an application example of the device 100 according to the embodiment, a process of obtaining an analysis result of movement of a micro LED in a micro LED transfer process of assembling the micro LED on a substrate using a self-assembly method in order to manufacture a micro LED display device will be described. In addition to the movement of the micro LED, movement of fluid, intensity or direction of force, intensity or direction of heat, etc. may be further included.

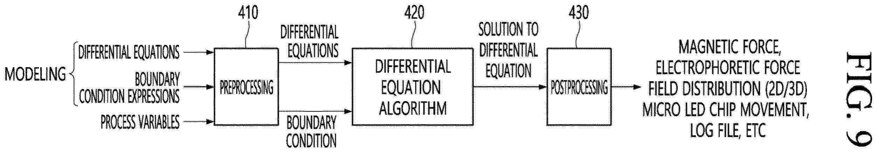

FIG. 9 shows analysis of the movement of a micro LED in a micro LED transfer process using a device according to an embodiment.

As shown in FIG. 9, in order to analyze the movement of the micro LED in the micro LED transfer process using the device (100 in FIG. 1) according to the embodiment, a preprocessing unit 410, a quantum computing device 420, and a postprocessing unit 430 may be provided. The preprocessing unit 410 is the preprocessing program 1310 shown in FIG. 2, the quantum computing device 420 is the solver program 1320 and the quantum computing device 142 shown in FIG. 2, and the postprocessing unit 430 may be the postprocessing program 1330 shown in FIG. 2.

The preprocessing unit 410 may receive differential equations, boundary condition expressions, and process variables.

The differential equations and boundary condition expressions may be obtained by modeling. For example, the differential equation may be an equation for obtaining a solution to each of a plurality of physical problems included in a multiphysics problem.

The boundary condition expression may be an expression that may obtain the size of the object and the boundary of each end of the object. For example, when manufacturing a micro LED display device, millions to hundreds of millions of micro LEDs are placed on a substrate, but it is impossible to analyze all movements of the numerous LEDs. Therefore, a boundary that specifies a predetermined area of the substrate, that is, a sub-pixel, needs to be determined. A boundary condition expression that may determine the boundary of such a sub-pixel may be obtained through modeling and input into the preprocessing unit 410.

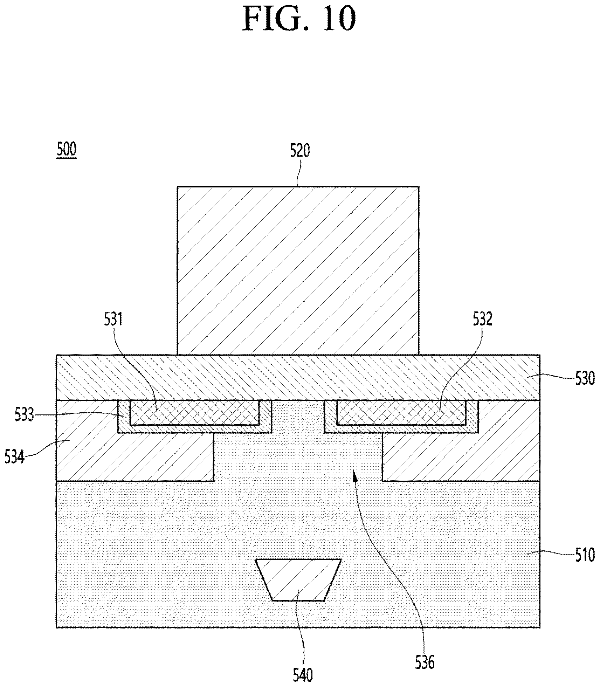

The process variables may be input through the input component (150 in FIG. 1). As shown in FIG. 10, the process variables may include the magnet shape, movement speed, electrode structure, voltage, frequency, etc. of the components constituting the object 500.

The object 500 may include components necessary to assemble the micro LED 540 on the substrate 530 using a self-assembly method to manufacture the micro LED display device. That is, the object may include a micro LED display device manufacturing apparatus and a series of components for manufacturing the micro LED display device in the manufacturing apparatus.

A series of components for manufacturing a micro LED display device include a substrate 530, assembly wirings 531 and 532 on the substrate 530, an insulating layer 533 covering the assembly wirings 531 and 532, and a partition wall 534 including an assembly hole 536 for accommodating the micro LED 540.

Meanwhile, the object may include, for example, a chamber (not shown), a fluid 510 accommodated in the chamber, and a magnetic body 520 that generates magnetic force to move the micro LED 540 within the fluid 510. A series of components for manufacturing a micro LED display device, that is, the substrate 530, the assembly wirings 531 and 532, the insulating layer 533, and the partition wall 534, may be included in the object.

The assembly process of the micro LED 540 will be described. First, a plurality of micro LEDs 540 may be dropped into the fluid 510 of the chamber. The substrate 530 provided with the assembly wirings 531 and 532, the insulating layer 533, and the partition wall 534 may be accommodated in the fluid 510 of the chamber. At this time, the assembly hole 536 of the partition wall 534 is in contact with the fluid 510. The magnetic body 520 located on the substrate 530 may be moved in a direction parallel to the surface of the substrate 530, that is, in a horizontal direction, thereby moving the plurality of micro LEDs 540 within the fluid 510 along the movement direction of the magnetic body 520. Meanwhile, a dielectrophoretic force is generated between the assembly wirings 531 and 532 by the voltage applied to the assembly wirings 531 and 532, and the micro LED 540 that is moving within the fluid 510 by the electrophoretic force and is near the assembly hole 536 of the partition wall 534 may be assembled in the assembly hole 536.

In this way, process variables related to a plurality of components constituting the object may be input to the preprocessing unit 410. For example, the process variables may include the size and material of the magnetic body 520, the intensity and direction of the magnetic force, the material and thickness of the substrate 530, the material and thickness of the assembly wirings 531 and 532, the thickness and material of the insulating layer 533, the thickness and material of the partition wall 534, the shape and depth of the assembly hole 536, the type of fluid 510, the dielectric constant and electrical conductivity of the insulating layer 533, and the dielectric constant and electrical conductivity of the fluid 510.

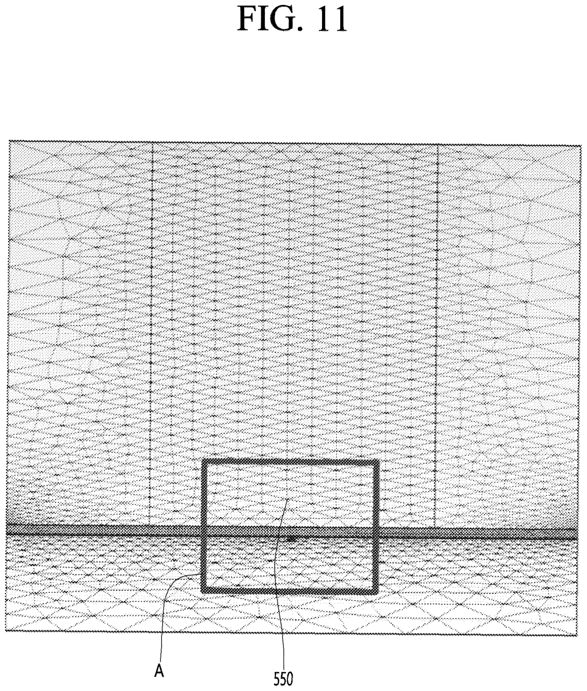

Meanwhile, the preprocessing unit 410 may obtain the initial value and boundary condition based on the process variables and boundary condition equations. Before obtaining the initial value and boundary condition, the preprocessing unit 410 may generate the geometric structure of the object based on the user input data input through the input component 150 and generate (or assign) a plurality of points of the generated geometric structure. As shown in FIG. 11, the geometric structure of the object and a plurality of points 550 of the geometric structure may be generated.

The preprocessing unit 410 may obtain initial value and boundary condition for each of the plurality of points 550 of the generated geometric structure.

Meanwhile, in order to analyze the movement of the micro LED (540 in FIG. 10) in the transfer process of the micro LED (540 in FIG. 10), each of a plurality of physical problems of the multiphysics problem must be solved using differential equations.

As described above, it may be impossible to obtain a solution to some of the multiphysics problems by the classical computing device (141 in FIG. 9). Therefore, according to the embodiment, the preprocessing unit 410 may classify the multiphysics problems into a problem related to classical computing and a problem related to quantum computing. The solution to the problem related to classical computing may be obtained by the classical computing algorithm (1321 in FIG. 2) and the classical computing device 141, and the solution to the problem related to quantum computing may be obtained by the quantum computing algorithm 1322 and the quantum computing device 142.

Referring again to FIG. 9, the quantum computing device 420 may execute the quantum computing algorithm 1322, that is, a differential equation algorithm, to obtain the solution to the problem related to quantum computing.

As described above, the initial value and boundary condition is converted into a quantum state using the basis function by the feature map, the expected value for the quantum state output by the variational quantum circuit may be measured, and the differential equation solution function value may be obtained. In addition, the differential value (dy/dx) of the solution function may be obtained using a quantum differentiation circuit. Then, a loss function may be calculated using the solution of the differential equation and the boundary condition (y(0)-c), thereby updating the parameter vector (θ) to optimize the loss function (L(dy/dx,y,x)) Through this series of processes, the optimal solution to the differential equation may be obtained.

The optimal solution to the differential equation may be the solution to the problem related to quantum computing.

Although not shown, the solutions to the problem related to classical computing may be obtained by the classical computing device 141.

The postprocessing unit 430 may obtain the solution to the multiphysics problem by matching the solution to the problem related to classical computing and the solution to the problem related to quantum computing. For example, in the case that the multiphysics problem is a summed force that sums up a plurality of forces (F_{DEP}, F_{ACEO}, F_{ETF}, F_{grav}, ...), as shown in FIG. 13, it may be classified into a force by which the solution to the problem related to classical computing may be obtained by the classical computing device 141 and a force by which the solution to the problem related to quantum computing may be obtained by the quantum computing device 420 (142 in FIG. 2), the solution to the problem related to classical computing and the solution to the problem related to quantum computing are obtained by the classical computing device 141 and the quantum computing device 420 (142 in FIG. 2) and then matched, thereby obtaining the value of the multiphysics problem, that is, the summed force. Through the summed force, the movement speed of the micro LED may be obtained. In FIG. 13, mₚ may be the mass of the micro LED, and uₚ may be the movement speed of the micro LED.

The postprocessing unit 430 may visualize the geometric structure using the solution to the differential equation obtained for each of the plurality of points 550 of the geometric structure, that is, the solution to the multiphysics problem. Visualization refers to displaying intensity, direction, movement, etc. using different colors, arrows of different thickness or length, and/or length or animation. For example, when the solution to the multiphysics problem is the summed force shown in FIG. 13, the geometric structure may be visualized by changing colors according to the intensity of the summed force at each of the plurality of points 550 of the geometric structure. In addition, the direction of the summed force, that is, the vector direction, may be reflected in the geometric structure using arrows. That is, by indicating the summed force at each of the plurality of points 550 with an arrow, the direction of the summed force in the geometric structure of the object may be easily identified.

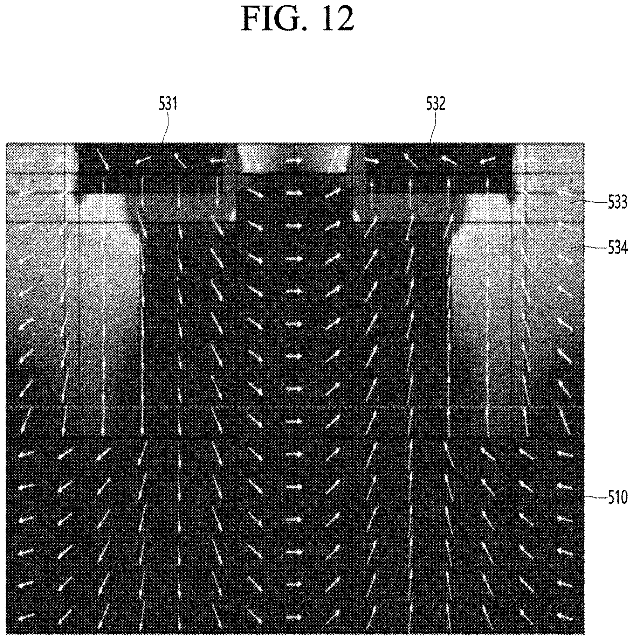

As shown in FIG. 12, the intensity of force may be identified through different colors reflected on the geometric structure, and the flow of force may be identified through the direction of the arrow.

Meanwhile, the postprocessing unit 430 may store a visualized image of the geometric structure in the memory (130 in FIG. 1). The visualized image of the geometric structure stored in the memory 130 may be output through the output component 160.

Meanwhile, the postprocessing unit 430 may determine an important point based on the solution to the differential equation of each of the plurality of points 550 of the geometric structure and assign at least one additional point around the determined important point. Information about the additional points assigned in this way may be sent to the preprocessing unit 410, and the solution to the differential equation of each additional point may be obtained by the preprocessing unit 410 and the quantum computing device 420 (142 in FIG. 2), and the geometric structure including not only the plurality of points 550 but also at least one additional point may be visualized based on the obtained solution to the differential equation.

The above detailed description should not be construed as restrictive in any respect and should be considered illustrative. The scope of the embodiments should be determined by reasonable interpretation of the appended claims, and all changes within the equivalent scope of the embodiments are included in the scope of the embodiments.

### [Industrial applicability]

Embodiments may be applied to technical fields capable of solving multiphysics problems. For example, embodiments may be applied to fluid dynamics simulation, distribution of various forces, movement of particles, optimal design of mechanisms, etc. in advanced industries such as the electronics industry, aviation industry, automobile industry, etc.

## Claims

1. A device comprising:
a classical computing device;
a quantum computing device;
a memory configured to store at least one program; and
a processor configured to communicate with the memory to execute the at least one program and control the classical computing device and the quantum computing device,
wherein the processor is configured to:
obtain an initial value and boundary condition of each of a plurality of points of a geometric structure for an object, by the classical computing device,
obtain a solution to a multiphysics problem of each of the plurality of points based on the obtained initial value and boundary condition of each of the plurality of points, by the quantum computing device, and
map the obtained solution to the multiphysics problem to each of the plurality of points, by the classical computing device.

2. The device of claim 1, wherein the processor is configured to classify the multiphysics problem into at least one problem related to classical computing and at least one problem related to quantum computing, by the classical computing device.

3. The device of claim 2, wherein the processor is configured to:
obtain a solution to the at least one problem related to classical computing based on the obtained initial value and boundary condition of each of the plurality of points, by the classical computing device, and
obtain a solution to the at least one problem related to quantum computing based on the obtained initial value and boundary condition of each of the plurality of points, by the quantum computing device.

4. The device of claim 3, wherein the processor is configured to match the solution to each of the at least one problem related to classical computing and the solution to each of the at least one problem related to quantum computing to obtain the solution to the multiphysics problem, by the classical computing device.

5. The device of claim 1, wherein the processor is configured to:
map input data to each of the plurality of points of the geometric structure, by the classical computing device, and
obtain the initial value and boundary condition of each of the plurality of points based on the mapped input data, by the classical computing device.

6. The device of claim 1, wherein the processor is configured to visualize the geometric structure based on the solution to the multiphysics problem mapped to each of the plurality of points, by the classical computing device.

7. The device of claim 6, wherein the processor is configured to store the visualized geometric structure in the memory as an image, by the classical computing device.

8. The device of claim 1, wherein the processor is configured to:
obtain at least one important point based on a result mapped to each of the plurality of points, by the classical computing device,
assign at least one additional point around each of the obtained at least one important point, by the classical computing device,
obtain the solution to the multiphysics problem of the assigned at least one additional point, by the quantum computing device, and
map the obtained solution to the multiphysics problem to each of the at least one additional point, by the classical computing device.

9. The device of claim 1, wherein the solution to the multiphysics problem is obtained using a differential equation.

10. A method comprising:
obtaining an initial value and boundary condition of each of a plurality of points of a geometric structure for an object, by a classical computing device,
obtaining a solution to a multiphysics problem of each of the plurality of points based on the obtained initial value and boundary condition of each of the plurality of points, by a quantum computing device, and
mapping the obtained solution to the multiphysics problem to each of the plurality of points, by the classical computing device.

11. The method of claim 10, comprising classifying the multiphysics problem into at least one problem related to classical computing and at least one problem related to quantum computing, by the classical computing device.

12. The method of claim 11, comprising:
obtaining a solution to the at least one problem related to classical computing based on the obtained initial value and boundary condition of each of the plurality of points, by the classical computing device, and
obtaining a solution to the at least one problem related to quantum computing based on the obtained initial value and boundary condition of each of the plurality of points, by the quantum computing device.

13. The method of claim 12, comprising matching the solution to each of the at least one problem related to classical computing and the solution to each of the at least one problem related to quantum computing to obtain the solution to the multiphysics problem, by the classical computing device.

14. The method of claim 10, wherein the obtaining the initial value and boundary condition comprises:
mapping input data to each of the plurality of points of the geometric structure, by the classical computing device, and
obtaining the initial value and boundary condition of each of the plurality of points based on the mapped input data, by the classical computing device.

15. The method of claim 10, comprising visualizing the geometric structure based on the solution to the multiphysics problem mapped to each of the plurality of points, by the classical computing device.

16. The method of claim 15, comprising storing the visualized geometric structure in a memory as an image, by the classical computing device.

17. The method of claim 10, comprising:
obtaining at least one important point based on a result mapped to each of the plurality of points, by the classical computing device,
assigning at least one additional point around each of the obtained at least one important point, by the classical computing device,
obtaining the solution to the multiphysics problem of the assigned at least one additional point, by the quantum computing device, and
mapping the obtained solution to the multiphysics problem to each of the at least one additional point, by the classical computing device.

18. The method of claim 10, wherein the solution to the multiphysics problem is obtained using a differential equation.
